Europäisches Patentamt

European Patent Office

Office européen des brevets

(11) Veröffentlichungsnummer: **0 240 833 B1**

(12) **EUROPÄISCHE PATENTSCHRIFT**

(45) Veröffentlichungstag der Patentschrift: **11.09.91**

(51) Int. Cl.5: **H04B 3/46**

(21) Anmeldenummer: **87104333.7**

(22) Anmeldetag: **24.03.87**

(54) Überwachungsvorrichtung zur Überwachung des Betriebzustandes von Übertragungseinrichtungen der Nachrichtenübertragungstechnik.

(30) Priorität: **11.04.86 DE 3612275**

(43) Veröffentlichungstag der Anmeldung:
**14.10.87 Patentblatt 87/42**

(45) Bekanntmachung des Hinweises auf die
Patenterteilung:
**11.09.91 Patentblatt 91/37**

(84) Benannte Vertragsstaaten:
**AT BE CH DE ES FR GB GR IT LI NL SE**

(56) Entgegenhaltungen:
**EP-A- 0 156 753**
**WO-A-84/03359**

**PATENT ABSTRACTS OF JAPAN, Band 8, Nr.**
**131 (E-251)[1568], 19. Juni 1984; & JP-A-59 43**
**639 (CHIYUUBU DENRIYOKU K.K.) 10-03-1984**

**PATENT ABSTRACTS OF JAPAN, Band 4, Nr.**
**137 (E-27)[619], 25. September 1980; & JP-**
**A-55 90 160 (NIPPON DENKI K.K.) 08-07-1980**

(73) Patentinhaber: **Siemens Aktiengesellschaft**
**Wittelsbacherplatz 2**
**W-8000 München 2(DE)**

(72) Erfinder: **Drügh, Paul, Dipl.-Phys.**
**Stockmannstrasse 28**
**W-8000 München 71(DE)**
Erfinder: **Schmidt, Volker, Dipl.-Ing.**
**Stiftsbogen 14**
**W-8000 München 70(DE)**

## Beschreibung

Überwachungsvorrichtung zur Überwachung des Betriebszustandes Von Übertragungseinrichtungen der Nachrichtenübertragungstechnik

Die Erfindung bezieht sich auf eine wie im Oberbegriff des Patentanspruches 1 angegebene Überwachungsvorrichtung.

Eine derartige Überwachungsvorrichtung wurde in der älteren, nicht vorveröffentlichten Patentanmeldung Aktenzeichen 86 102 390.1 bereits vorgeschlagen.

Der ältere Vorschlag bezieht sich auf eine Anordnung, die es gestattet, Überwachungsinformationen mehrerer nachrichtentechnischer Geräte oder Nachrichtenübertragungseinrichtungen zu sammeln, mittels einer Signalsammeleinrichtung an eine Zentrale zu übermitteln und in einer zentralen Auswerteeinrichtung auszuwerten. Solche Überwachungsinformationen können z.B. Pilotalarme bei analoger oder Codefehleralarme bei digitaler Nachrichtenübertragung sein.

Ferner ist aus Patent Abstracts of Japan, Band 8, Nr. 131 (E-251) (1568), 19. Juni 1984, Seite 166 E 251; & JP-A-59 43 639 (Chiyuubu Denriyoku K.K.) 10.03.84 bereits eine Anordnung zum Sammeln von Eigenüberwachungsinformationen in Übertragungseinrichtungen der elektrischen Nachrichtenübertragungstechnik bekannt. Die bekannte Anordnung dient zur Fehlerüberwachung einer Übertragungsstrecke. Um einen bedeutenden Fehler im voraus zu verhindern, wird bei Auftreten eines Fehlersignals ein digitaler Speicher veranlaßt, an Meßpunkten gemessene Meßwerte zu speichern. Diese Meßwerte können mittels eines Modems und einer Übertragungsstrecke übertragen werden. Die Fehlersignalinformation wird auf mehreren Speichern gespeichert, so daß sie für eine spätere Ausgabe zur Verfügung steht.

Eine Signalsammeleinrichtung, bei der Signalsammler Baugruppen einer Übertragungseinrichtung der elektrischen Nachrichtenübertragungstechnik fortlaufend abfragen und die dabei gewonnenen Überwachungsinformationen fortlaufend an eine Zentralstation zur zentralen Betriebsbeobachtung weitergeben, ist dabei offenbar nicht vorgesehen. Tritt kein Fehlersignal auf, so werden auch keine Meßwerte gespeichert.

Aus E. Diggelmann, B. Lüscher: "Die Alarmregistrieranlage AREGA A 150", Hasler-Mitteilungen Nr. 3, 1975, Seiten 77 bis 88 ist es bereits bekannt, einen Prozeßrechner für die periodische Abfrage einer großen Zahl von Eingängen einzusetzen, um möglichst genaue Aussagen über das Störverhalten eines Übertragungsnetzes zu erhalten. Die bekannte Anlage enthält ein Abtastsystem. Dieses Abtastsystem besteht aus einer Abtaststeuereinheit und bis zu vier Abtastmultiplexern. Die Multiplexer erlauben ein gruppenweises Abfragen der Signalzustände durch die Ab taststeuereinheit, die unter anderem die Aufgabe hat, diese mit den Zuständen des vorhergehenden Abtastzyklus zu vergleichen und alle Abweichungen in besonderer Form in einen Leitungsnummernspeicher einzuschreiben, wo sie weiter verarbeitet werden.

Für jede zu überwachende Linie werden zwei Signale an die Alarmregistrieranlage herangeführt. Diese beiden Signale können nur zwei Zustände aufweisen. Das eine Signal besagt, ob eine Linie gestört oder ungestört ist, das andere, ob eine Alarmglocke ein- oder ausgeschaltet ist. Bei der Auswertung werden die Störungen je nach Dauer in drei Klassen eingeteilt. Außerdem werden Folgemeldungen unterdrückt.

Vergleichsweise häufige Fehleralarme, bei der Nachrichtenübertragung festgestellte Fehler oder Störungen können Anlaß dafür sein, daß eine Nachrichtenübertragungsstrecke einer besonderen Beobachtung unterworfen wird. So kann man z.B. bei vergleichsweise häufigen Fehleralarmen in einem Digitalsystem an einer geeigneten Stelle einer Übertragungseinrichtung einen Codefehlermeßplatz bzw. einen Meßplatz zur Erfassung der falschen Rahmenkennungswörter installieren und die Meßergebnisse anhand eines Streifendruckerprotokolls auswerten. Insbesondere kann man dabei überprüfen, ob die jeweiligen Anforderungen an die Übertragungsqualität, wie sie durch die Spezifikation CCITT G821 oder dgl. vorgegeben sein können, erfüllt werden. Selbst bei einer Auswertung durch einen in den Meßplatz einbezogenen Computer ist dies jedoch insbesondere dann mit einem erheblichen Aufwand verbunden, wenn viele Übertragungssysteme gleichzeitig überwacht werden sollen.

Aufgabe der Erfindung ist es, eine wie im Oberbegriff des Patentanspruches 1 angegebene Überwachungsvorrichtung derart auszubilden, daß in möglichst wirtschaftlicher Weise Störungsmeldungen gesammelt und darüber hinaus ständig weitere Kriterien für die Qualität der überwachten Übertragungseinrichtungen für eine bedarfsweise Abfrage bereit gehalten werden können.

Gemäß der Erfindung wird die gestellte Aufgabe in der im kennzeichnenden Teil des Patentanspruches angegebenen Weise gelöst. Dabei können alle oder nur besonders dringende Störungsmeldungen der Signalsammeleinrichtung Zugeführt werden. Die Speichereinrichtung kann gegebenenfalls zusätzlich zu den Meßwerten Störungsmeldungen speichern und für eine allfällige Abfrage bereithalten. Als Auswertevorrichtung, die die gesammelten Informationen im Hinblick auf die zu registrierenden Daten auswertet, dient vorzugsweise ein Mikrocomputer.

Die Meßwerte können insbesondere Codefehler, Synchronausfälle, Rauschpegel oder dergleichen sein.. Für diese Meßwerte sind in den zu überwachenden Geräten Meßvorrichtungen vorgesehen, die gegebenenfalls eine Vorverarbeitung von Rohdaten bzw. von originären Meßwerten vornehmen können. Die Meßwerte können in den Geräten und/oder in den Auswerte- und Speichervorrichtungen mit vorgegebenen Grenzwerten verglichen werden, um Störungsmeldungen zu bilden. Dabei können dringende oder weniger dringende Alarme unterschieden werden.

Durch diese Maßnahmen ergibt sich der Vorteil, daß in Nachrichtenübertragungseinrichtungen mit einer Vielzahl von Baueinheiten auf besonders wirtschaftliche Weise zusätzlich zu Störungsmeldungsinformationen weitere Kriterien gesammelt und zur allfälligen weiteren Auswertung bereitgehalten werden können, die nähere Aufschlüsse über die Übertragungsqualität der überwachten Übertragungseinrichtungen geben. Von besonderem Vorteil ist, daß mit vergleichsweise sehr geringem Aufwand eine laufende Überwachung der Übertragungsqualität möglich ist und dabei die zur Übertragung mittels der Signalsammeleinrichtung anfallende Datenmenge klein gehalten wird, weil nur im Bedarfsfall, z.B. bei einem Hinweis eines Kunden, abgefragt und dokumentiert zu werden braucht. Ein ganz wesentlicher Vorteil besteht darin, daß z.B. bei Hinweis eines Kunden die Meßwerte schon vorliegen, während man sonst in der Regel mit Meßgeräten erst eine langwierige Messung starten muß, um die Übertragungsqualität der Verbindung zu überprüfen. Im Zweifelsfall kann es entscheidend sein, daß die Registriereinrichtung denjenigen Zeitraum erfaßt hat, auf den sich der Hinweis bezieht. Dies wird nur durch eine dauernde Qualitätsüberwachung ermöglicht.

Die laufende Registrierung der für die Übertragungsqualität maßgeblichen Meßwerte findet über einen geeigneten Zeitraum statt, der vorzugsweise mehrere Tage umfaßt. Eine Abfrage und eine Auswertung der registrierten Daten finden insbesondere nur aus gegebenem Anlaß statt. Insbesondere kann man sich z.B. bei Hinweisen von Telefon-oder Datenübertragungs-Kunden nachträglich Klarheit über eventuelle Störungsereignisse verschaffen.

Die Überwachung digitaler Verbindungen orientiert sich an der CCITT-Spezifikation G821, die für den Anteil der mit Bitfehlern behafteten Sekunden und Minuten bestimmte Werte vorschreibt. Als Bezugszeitraum wird mindestens eine Woche angenommen, auch die Auswertung mit der Bezugszeit 1 Tag kann zweckmäßig sein.

Da die Daten im zu überwachenden Gerät selbst gespeichert sind, ist eine Bestückung des Gestells auch mit verschiedenen Gerätetypen ohne Umprogrammierung einer zentralen Registriereinrichtung möglich. Darüber hinaus kann bei Ausfall des Gerätes die Vorgeschichte anhand der gespeicherten Daten in der Reparaturstelle analysiert werden.

Vorteilhafte Ausgestaltungen der Erfindung ergeben sich aus den Unteransprüchen.

Bei der Ausbildung der Überwachungsvorrichtung nach Anspruch 2 kann die gemeinsame Aufnahmevorrichtung ein Einsatz, insbesondere der Bauweise 7R sein. Die Überwachungs-Baueinheit stellt dabei eine Baugruppe dar.

Die Maßnahmen nach Anspruch 3 sind mit einem besonders geringen Aufwand verbunden. Vorzugsweise findet dabei ein Mikroprozessor Verwendung.

Die Weiterbildung nach Anspruch 4 ist mit einem besonders geringen Verdrahtungsaufwand verbunden und besonders geeignet, im Fehlerfall den Weg zum fehlerhaften Gerät zu weisen.

Durch die Maßnahmen nach Anspruch 5 ergibt sich eine insbesondere im Hinblick auf eine einfache Verdrahtung besonders vorteilhafte Unterteilung der Überwachungsvorrichtung in einen zentralen Teil und mehreren dezentrale Teile.

Die bei der Weiterbildung nach Anspruch 6 vorgesehene Uhr ermöglicht es, den Zeitpunkt eines Geräte- oder Systemausfalls während der automatischen Registrierung der Meßdaten mit festzuhalten, so daß bei einer späteren Abfrage der Daten eine zeitliche Zuordnung der Meßwerte verschiedener Registriereinrichtungen möglich ist.

Die Maßnahmen nach Anspruch 7 gewährleisten, daß die Funktion der Uhr auch bei einem vorübergehenden Ausfall der Stromversorgung erhalten bleibt. Für den Fall, daß ein Datenspeicher Verwendung findet, der auf eine unterbrechungsfreie Stromversorgung angewiesen ist, ist sichergestellt, daß der Speicherinhalt bei einem aus der Aufnahmevorrichtung herausgenommenen Gerät erhalten bleibt.

Eine Bildung von Störungsmeldungen im zentralen Überwachungsteil hat den Vorteil, daß zusätzliche oder geänderte Alarmkriterien ohne Änderung der überwachten Baugruppe berücksichtigt werden können. Insbesondere kann ein entsprechend Anspruch 8 vorgesehenes PROM leicht anwenderspezifisch programmiert werden. Ferner kann die Überwachungsvorrichtung durch Austauschen des PROMS leicht mit einem neuen Überwachungsprogramm ausgerüstet werden.

Ist entsprechend Anspruch 9 eine Vorrichtung zur Einstellung des Überwachungsmodus vorgesehen, so kann die Vorrichtung im Rahmen des vorgegebenen Überwachungsprogramms leicht auf den jeweils gewünschten Überwachungsmodus eingestellt werden, insbesondere können vorgegebene Grenzwerte für die Auswertung verändert werden. Dies kann bei einem EEPROM insbesondere mit Hilfe eines an den Mikroprozessor anschließbaren Einstellcomputers erfolgen.

Die Erfindung wird anhand der in den Figuren dargestellten Ausführungsbeispiele näher erläutert.

Es zeigen

Fig. 1 eine Schaltungsanordnung zum Sammeln von Störungsmeldungsinformationeiner Vielzahl von Überwachungsvorrichtungen,

Fig. 2 einen zentralen Überwachungsteil einer Überwachungsvorrichtung mit Signalregistriereinrichtung,

Fig. 3 ein Leitungsendgerät mit dezentralem Überwachungsteil, der an den zentralen Überwachungsteil nach Fig. 2 anschließbar ist und

Fig. 4 ein Protokoll, das aus den im Datenspeicher der Überwachungsvorrichtung nach Fig. 2 abgefragten Daten erstellbar ist und aus dem Qualitätsmerkmerkmale einer überwachten Nachrichtenübertragungseinrichtung hervorgehen.

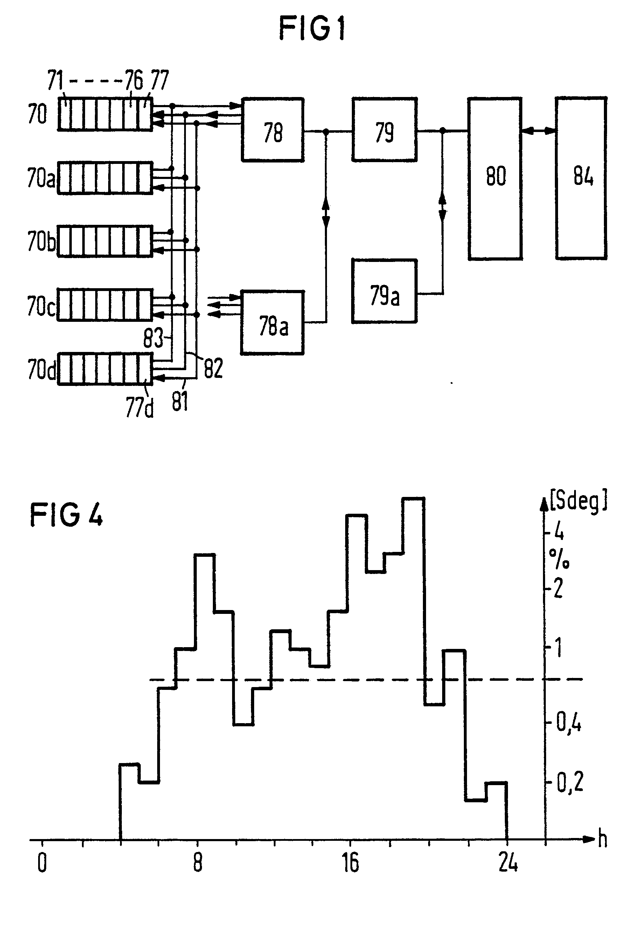

Fig. 1 zeigt eine Signalerfassungseinrichtung mit einem Datennetz von Baumstruktur. Die Stationen sind in mehreren Netzebenen angeordnet. An die zentrale Datenverarbeitungseinrichtung 84 ist die Station 80 der dritten Netzebene angeschlossen. An die Station 80 sind die Stationen der zweiten Netzebene angeschlossen, von denen in der Figur nur die Stationen 79 und 79a gezeigt sind. Die Zahl der Stationen der zweiten Netzebene kenn z.B. ≦ 120 sein.

An die Stationen 79 und 79a der zweiten Netzebene sind jeweils mehrere Stationen angeschlossen, von denen in der Figur nur die an den Signalsammler 79 angeschlossenen Stationen 78, 78a gezeigt sind. Die Zahl der Stationen der ersten Netzebene, die jeweils an eine Station der zweiten Netzebene angeschlossen sind, kann z.B. ebenfalls n ≦ 120 sein.

An jede Station der ersten Netzebene sind mehrere jeweils in einem zentralen Überwachungsteil enthaltene Signalgeber angeschlossen. Von diesen Überwachungsteilen sind nur die an den Signalsammler 78 angeschlossenen Überwachungsteile 77...77d der als Einsätze ausgebildeten Geräte 70...70d einer Nachrichtenübertragungseinrichtung dargestellt. Die Zahl der an eine Station der ersten Netzebene angeschlossenen Signalgeber beträgt z.B.m ≦ 16.

Die Stationen sind jeweils über Busleitungen, die im Vollduplex- oder Halbduplexbetrieb betrieben werden, verbunden. Am Stamm bzw. Kopf des Netzes befindet sich die Station 84, an den Ausläufern liegen die Signalgeber. Die Stationen der ersten und zweiten Netzebene befinden sich jeweils an einem Knoten des Datennetzes.

Die Signalgeber der Überwachungsteile 77...77d sind über den Adressenbus 81 und den Datenbus 83 an den Signalsammler 78 angeschlossen. Außerdem ist jeder Signalgeber über einen Steuerbus 82 an den zugeordneten Signalsammler angeschlossen. Die Funktion des Adressenbusses kann auch von Befehlsleitungen übernommen werden, die sternförmig vom Signalsammler zu den Geräten führen.

Die Signalsammler 78, 78a, die insbesondere durch Mikroprozessor-Schaltungen gebildet sind, sammeln Störungsmeldungsinformationen und geben diese an eine zentrale Datenverarbeitungseinrichtung weiter. Dabei werden vom Signalsammler 78 z.B. Telegramme von den zu überwachenden Geräten 70...70d empfangen. Die Telegramme werden von Überwachungseinrichtungen, die in diese Geräte integriert sind, jeweils auf eine Abfrage durch den betreffenden Signalsammler hin ausgesendet. Im Ausführungsbeispiel nach Fig. 1 sind die zu überwachenden Geräte Einsätze mit je sechs 2-Mbit/s-Leitungsendgeräten und dem zentralen Überwachungsteil. In entsprechender Weise können Geräte anderer Nachrichtenübertragungseinrichtungen überwacht werden.

Der Signalsammler 78 bzw. 78a wertet die empfangenen Telegramme nach Störungsmeldungen aus und sendet diese an den Signalsammler 79, der die in der nächsten Netzebene gesammelten Störungsmeldungsinformationen an den Signalsammler 80 weitergibt. In der zentralen Datenverarbeitungseinrichtung 84 können die Informationen sichtbar gemacht und dokumentiert werden. Von hier werden dann Maßnahmen zur Beseitigung der Störung eingeleitet.

Soweit hat das Signalsammel-Netz die Funktion einer Signalisierungseinrichtung.

Für eine Überwachung der Geräte 70...70d hinsichtlich bestimmter Qualitätsmerkmale werden neben den Störungsmeldungsinformationen auch laufend Meßwerte erfaßt, ausgewertet und registriert.

Jeder Signalgeber der in den Geräten 70...70d enthaltenen Überwachungsteile 77...77d ist mit einer Signal-Registriereinrichtung in einer als Leiterplattenbaugruppe ausgebildeten Überwachungsbaugruppe zusammengefaßt.

Die Meßwerte werden während des Betriebes durch die im zentralen Überwachungsteil enthaltene Vorrichtung zur Ablaufsteuerung von den Geräten 70...70d abgefragt und in der Speichervorrichtung laufend registriert.

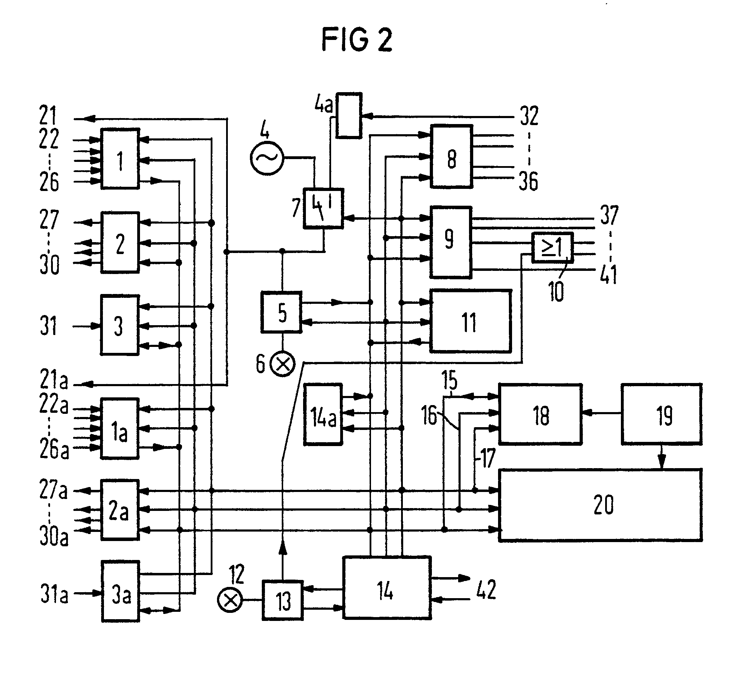

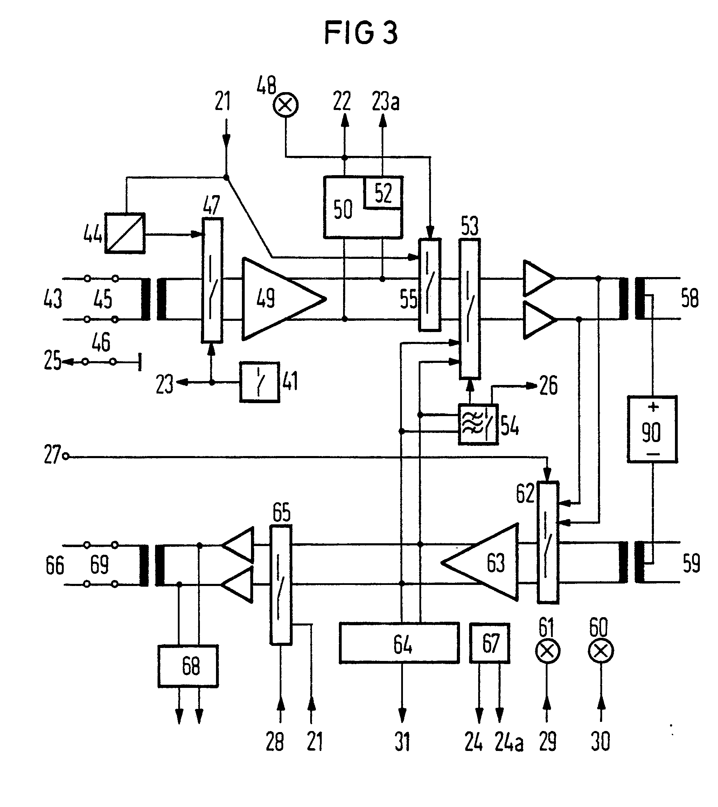

Im Ausführungsbeispiel nach Fig. 2 und 3 sind es die jeweils in 1 Sekunde aufgelaufenen Codefehler des 2-Mbit/s-Signals in den Leitungsendgeräten 71...76. Die Meßinformation wird im Normalfall vom zentralen Überwachungsteil 77 nicht an den zugeordneten Signalsammler 78 weitergegeben. Die Auswerte- und Speichervorrichtung wertet Meßinformation, insbesondere Codefehler, die im Leitungsendgerät laufend erfaßt werden, aus und speichert das Ergebnis in bestimmten Zeitabschnitten, z.B. 1 Stunde, ab.

Bei der Auswertung kann es in manchen Fällen nützlich sein, die Störungsmeldungen mit zu registrieren, obwohl diese Aufgabe vornehmlich von der Zentrale 84 wahrgenommen wird. Störungsmeldungen werden bei ihrem Auftreten zusammen mit der Uhrzeit abgespeichert. Aufbereitete Meßwerte werden zusammen mit der Uhrzeit stündlich gespeichert.

Die Auswertung der Meßergebnisse geschieht in der im zentralen Überwachungsteil enthaltenen Signalregistriereinrichtung. Es können auch Gerätekennungen (z.B. Betriebseinstellung, Bestückung) abgespeichert werden. Die Daten werden vorzugsweise so ausgewertet, daß sie zu den Anforderungen einer vorgegebenen Spezifikation direkt in Beziehung gesetzt werden können. Die so z.B. über mehrere Tage gespeicherten Daten können dann bei Bedarf über den Anschluß 42 des zentralen Überwachungsteils, der eine serielle Schnittstelle hat, mit Hilfe eines Personalcomputers abgerufen und dokumentiert werden. Dies kann an Ort und Stelle oder an einem anderen Ort geschehen, an den das betreffende Gerät zu Untersuchungszwecken gebracht wird. Andererseits kann der in diesem Fall z.B. als Blasenspeicher ausgebildete Datenspeicher der betreffenden Überwachungseinrichtung entnommen werden, um seinen Inhalt an einem anderen Ort auszuwerten.

Die Signalregistriereinrichtung ist im Gegensatz zu den Signalsammlern speziell auf den zu überwachenden Gerätetyp zugeschnitten. Dabei kann für viele Gerätetypen die gleiche Mikroprozessor-Baugruppe Verwendung finden. Die Anpassung an die speziellen Anforderungen erfolgt dann durch das Auswerteprogramm.

Fig. 2 zeigt einen Stromlauf für den zentralen Überwachungsteil 77 des Einsatzes 70 der in Fig. 3 gezeigten Schaltungsanordnung. An den zentralen Überwachungsteil lassen sich beispielsweise sechs PCM-Leitungsendgeräte der in Fig. 3 gezeigten Art und darüber hinaus je Leitungsendgerät eine Einrichtung zur Fernstromversorgung anschließen.

Der Mikroprozessor 14 dient als Vorrichtung zur Ablaufsteuerung und ist mit einer Überwachungsvorrichtung 13 versehen, die insbesondere eine sogenannte watch dog bzw. Wachhundschaltung sein kann. Ein Ausgang der Überwachungsvorrichtung 13 ist an die Anzeigevorrichtung 12 geführt.

An den Mikroprozessor 14 sind über den Datenbus 15, den Adreßbus 16 und den Steuerbus 17 eine Vielzahl von integrierten Schaltkreisen angeschlossen. Je an die Überwachungseinheit anschließbaren Leitungsendgerät sind ein Schnittstellenbaustein 1 für Meldungen, ein Schnittstellenbaustein 2 für Befehle und ein Zähler 3 zum Zählen von Codeverletzungsimpulsen vorgesehen und an die Busse 15 bis 17 angeschlossen. Weitere an die Busse 15 bis 17 angeschlossene Bausteine sind das externe PROM (14a) zur Speicherung des Überwachungsprogramms, die Schnittstellenbausteine 8 und 9, die Vorrichtung 11 zur Einstellung des Überwachungsmodus, die Uhr 18 und der Datenspeicher 20.

Die an die Busse 15 bis 17 angeschlossenen Schnittstellenbausteine 8 und 9 dienen zum Anschluß üblicher Signalisierungseinrichtungen. Der Schnittstellenbaustein 8 gibt sogenannte Systemalarme ZA und ZB, bzw. Sammelalarme in zwei Dringlichkeitsstufen ab. Die Ausgänge des Schnittstellenbausteines 9 führen zu einem Signalfeld im Gestell. Dabei werden die Alarme A/AZ, ein Signal EL mit der Bedeutung "Signal quittiert" bzw. "Ortungsgerät angeschaltet" sowie über das mit einem seiner Eingänge am Ausgang der Überwachungsschaltung 13 liegende ODER-Glied 10 Alarme B/BZ an das Signalfeld abgegeben.

Der zentrale Überwachungsteil enthält ferner den AIS-Generator 4, mit dessen Hilfe ein AIS-Signal (Alarm Indication Signal) zentral für mehrere Leitungsendgeräte erzeugt wird. Mit Hilfe des Umschalters 7 läßt sich wahlweise der Ausgang des AIS-Oszillators 4 oder der Ausgang der Vorrichtung 4a für externen AIS-Takt an die Anschlüsse 21, 21a usw. bzw. an einen Anschluß je Leitungsendgerät führen.

Die Vorrichtung 5 zur Überwachung des AIS-Signals ist mit ihrem AIS-Signaleingang an den Ausgang des Umschalters 7 angeschlossen. Ein Ausgang der Vorrichtung 5 ist an das Anzeigeelement 6 geführt. Die Vorrichtung 5 ist ferner mit dem Datenbus 15 und dem Adreßbus 16 verbunden.

Der Datenspeicher 20 ist ein Speicher mit wahlfreiem Zugriff, insbesondere ein über die Batterie 19 gepuffertes RAM oder ein Blasenspeicher. Die Speicherkapazität ist vorzugsweise so gewählt, daß sie für eine Woche Betrieb ausreicht. Beispielsweise kann ein 64-kbyte-Speicher Verwendung finden.

Die Uhr 18 und der Datenspeicher 20 werden im Normalbetrieb aus einer in der Figur nicht dargestellten Stromversorgungseinrichtung gespeist. Die Uhr 18 und der im gezeigten Beispiel als RAM ausgebildete Datenspeicher 20 sind zusätzlich an die Batterie 19 angeschlossen. Die Batterie 19 kann durch die Stromversorgung gepuffert sein und übernimmt bei einem Ausfall der Stromversorgung die Speisung von Datenspeicher und Uhr.

Ferner ist an die Busse 15 bis 17 die Vorrichtung 11 zur Einstellung des Überwachungsmodus angeschlossen. Die Vorrichtung 11 kann durch einen Codeschalter oder ein EEPROM gebildet sein, das sich mit Hilfe eines an die serielle Schnittstelle am Anschluß 42 angeschlossenen Einstellcomputers einstellen läßt.

Das in Fig. 3 gezeigte Leitungsendgerät enthält je Übertragungsrichtung einen Regenerator 49 bzw. 63. In der Senderichtung (Amt-Leitung) gelangen die Nachrichtensignale vom Eingang 43 über das Kontaktpaar 45 an die Vorrichtung 47 zur wahlweisen Einspeisung eines Ersatzsignals, den Regenerator 49, die Vorrichtung 55 zum wahlweisen Einspeisen eines AIS-Signals und die Vorrichtung 53 zum wahlweisen Herstellen eines Schleifenschlusses zum Ausgang 58.

In der Empfangsrichtung (Leitung-Amt) gelangen die Nachrichtensignale vom Eingang 59 über die Vorrichtung 62 zum wahlweisen Herstellen eines Schleifenschlusses, den Regenerator 63, die Vorrichtung 65 zum wahlweisen Einspeisen eines AIS-Signals und über das Kontaktpaar 69 zum Ausgang 66. Die Kontaktpaare 45 und 69 gehören zusammen mit dem einpolig an Masse liegenden Kontakt 46 ein und demselben Steckverbinder an.

Der Anschluß 21 für ein AIS-Signal ist einerseits an den Ersatzsignalgenerator 44 und andererseits an die Vorrichtung 55 zum wahlweisen Einspeisen eines AIS-Signals geführt. Die Vorrichtung 47 ist an den Ersatzsignalgenerator 44 angeschlossen.

An den Ausgang des Regenerators 49 ist die Überwachungsvorrichtung 50 angeschlossen, die an den Anschluß 22 ein Störungssignal abgibt, sobald am Ausgang des Regenerators 49 Nachrichtensignale fehlen. Gleichzeitig wird damit an die Vorrichtung 55 der Befehl "Speise-AIS-Signal ein" abgegeben. Die Überwachungsvorrichtung 50 enthält die Vorrichtung 52 zur Erkennung von AIS-Signalen, die an den Anschluß 23a gegebenenfalls das Kriterium "AIS-Signal erkannt" abgibt.

Die an die Überwachungsvorrichtung 50 angeschlossene Anzeigevorrichtung 48 zeigt gegebenenfalls an, daß am Ausgang des Regenerators 49 kein Signal vorhanden ist.

An den Ausgang des Regenerators 63 ist die Vorrichtung 64 zur Codefehlererkennung angeschlossen, deren Ausgang über den Anschluß 31 zum Zähler 3 des zentralen Überwachungsteiles führt.

Der zentrale Überwachungsteil nach Fig. 2 und das Leitungsendgerät nach Fig. 3 sind zusätzlich wie folgt miteinander verbunden.

Das im AIS-Oszillator 4 oder in der Aufbereitungsvorrichtung 4a aufbereitete AIS-Signal wird über den Anschluß 21 an den Ersatzsignalerzeuger 44, an die Vorrichtung 55 zur wahlweisen Einspeisung des AIS-Signals und an die Vorrichtung 65 zur wahlweisen Einspeisung des AIS-Signals in die Gegenrichtung geführt. Von der Überwachungsvorrichtung 50 gelangt über den Anschluß 22 gegebenenfalls ein Signal mit der Bedeutung "Signal am Eingang 43 nicht vorhanden" und über den Anschluß 23a gegebenenfalls ein Signal mit der Bedeutung "AIS-Signal erkannt" an den Schnittstellenbaustein 1.

Über die Anschlüsse 24 und 24a wird vom Kennungsgeber 67 eine Kennung an den Schnittstellenbaustein 1 abgegeben, die den Gerätetyp definiert und eine Information über die Bestückung des Gestellplatzes darstellt.

Über den mit dem Kontakt 46 verbundenen Anschluß 25 gelangt im Normalbetrieb Massepotential zum Schnittstellenbaustein 1. Ist die Vorrichtung 47 mit Hilfe des Schalters 41 Bereitschaftsbetrieb eingestellt, so gelangt ein entsprechendes Einstellkriterium vom Ausgang des Schalters 41 über den Anschluß 23 ebenfalls zum Schnittstellenbaustein 1.

Ist ein Ortungsgerät an das Leitungsendgerät angeschlossen, so ist der Kontakt 46 geöffnet. Das Ortungsgerät gibt über den Anschluß 27 gegebenenfalls einen Schleifschlußbefehl an die Vorrichtung 62 ab.

Der Schnittstellenbaustein 2 gibt Befehle an das Leitungsendgerät nach Fig. 3 ab. Über den Anschluß 28 gelangt gegebenenfalls ein AIS-Einspeisebefehl an die Vorrichtung 65, über den Anschluß 29 gegebenenfalls ein Steuersignal zum Aktivieren des Anzeigeelementes 61, das eine Bitfehlerquote größer als $10^{-3}$ anzeigt und über den Anschluß 30 gegebenenfalls ein Steuersignal zum Aktivieren des Anzeigeelementes 60, das eine Bitfehlerquote von größer als $10^{-5}$ anzeigt.

Der Ausgang der Vorrichtung 64 zur Codefehlererkennung ist über den Anschluß 31 an den Zähler 3 geführt.

Der zentrale Überwachungsteil nach Fig. 2 dient zur Überwachung von sechs Leitungsendgeräten und der dazugehörigen Fernspeisebaugruppen. Der Mikroprozessor 14 steuert über den Datenbus 15, den Steuerbus 17 und den Adreßbus 16 die Schnittstellenbausteine 1, 2, 3, 8 und 9. Der zentrale Überwachungsteil ist durch die Uhr 18 und den Datenspeicher 20 zu einer Überwachungs- und Registriereinrichtung ergänzt.

Zum einen dient die Überwachungsvorrichtung nach Fig. 2 und Fig. 3 der Überwachung der Übertragung. Die festgelegten Alarmkriterien sind relativ grob und sollen nur die Entscheidung ermöglichen, ob Ersatzschaltungen vorgenommen oder Geräte ausgetauscht werden müssen.

Zur Registrierung der Übertragungsqualität im Betrieb enthält die Überwachungsvorrichtung noch einen Speicher und eine Uhr. Die gespeicherten Daten können über die Schnittstelle 42 von der Signalsammeleinrichtung her abgerufen werden. Insbesondere veranlaßt die Zentrale zu Zeiten, in denen keine Störmeldungen vorliegen, eine Übermittlung von Meßwerten über die Signalsammeleinrichtung, wobei dann per Interrupt sichergestellt wird, daß die Übertragung von Störungsmeldungen Vorrang hat.

Über den Schnittstellenbaustein 1 werden Meldungen von dem in Fig. 3 gezeigten Leitungsendgerät abgefragt. Für zusätzlich im selben Einsatz untergebrachte Leitungsendgeräte und je ein Fernspeisegerät sind der Schnittstellenbaustein 2a und weitere, in der Figur nicht dargestellte Schnittstellenbausteine vorgesehen.

Es kann günstig sein, diese Schnittstellenbausteine ganz oder teilweise dezentral auf den zu überwachenden Baugruppen unterzubringen. Dabei wird die Verbindung der zu überwachenden Baugruppen mit der zentralen Überwachung über Daten-, Adreß- und Steuerbus 15, 16, 17 durchgeführt.

Nach Fig. 3 sind die Meldungen für das Leitungsendgerät "ankommendes Signal fehlt am Eingang 43", "AIS-Signal erkannt", "Bereitschaftsbetrieb", "Ortungsgerät angeschlossen", "Schleife im fernen Leitungsendgerät aktiv" und Kennungen, aus denen z.B. eine Gerätenummer hervorgeht. Ob der für das Leitungsendgerät vorgesehene Platz bestückt ist und mit welcher Baugruppe, wird ebenfalls gemeldet.

Der Zähler 3 zählt die vom Leitungsendgerät abgegebenen Codefehlerimpulse. Die vom Mikroprozessor 14 zyklisch ausgelesenen Zählerergebnisse ermöglichen die Messung der Codefehlerquote, woraus die gewünschten Alarmkriterien abgeleitet werden.

Alarme werden an den Schnittstellenbausteinen 8 und 9 abgegeben und zwar Systemalarme vom Schnittstellenbaustein 8 und Alarme für ein Signalfeld vom Schnittstellenbaustein 9. Die Art der Alarme entspricht zweckmäßigerweise dem bei der betreffenden Nachrichtenübertragungseinrichtung üblichen Signalisierungskonzept.

Darüber hinaus gibt der zentrale Überwachungsteil an der Schnittstelle 42 ein Telegramm an den Signalsammler der Schaltungsanordnung nach Fig. 1 ab. Dieses Telegramm enthält neben den Alarmdaten noch Informationen über Betriebseinstellung, Bestückung sowie über den Überwachungsmodus. Darüber hinaus kann es auch Meßdaten enthalten.

Der Überwachungsmodus wird über die Vorrichtung 11 eingestellt, die vorzugsweise ein Schalter oder ein EEPROM ist. Gegebenenfalls kann der Überwachungsmodus anstatt in der Vorrichtung 11 im RAM des Prozessors 14 gespeichert werden. Die Vorrichtung 11 bietet die Möglichkeit, den Überwachungsmodus bei Bedarf zu ändern, so daß man die Überwachungsvorrichtung an betriebliche Besonderheiten besonders leicht anpassen kann.

Insbesondere läßt sich die Überwachung gegenüber Fehlerbüscheln empfindlich oder unempfindlich einstellen. Andererseits können dringende Alarme als nicht dringende ausgegeben werden und umgekehrt. Ferner kann zur Erzielung einer Hysterese eine Einstellung gewählt werden, bei der der $10^{-3}$-Alarm erst wieder weggeht, wenn der $10^{-5}$-Alarm nicht mehr anliegt.

Von der Fernspeisebaugruppe 90 (Fig. 3) können als Meldungen "Fernspeisung ausgefallen", "Fernspeisekreis unsymmetrisch" und "Ortungsgerät angeschlossen" sowie die Betriebseinstellungen "maximale Spannung 100 V" bzw. "maximale Spannung 200 V" abgerufen werden.

Fig. 4 zeigt ein Beispiel für eine Auswertung von Meßwerten. Dokumentiert ist hier der Näherungswert des Anteils der durch einen oder mehrere Bitfehler gestörten Sekunden in den 64-kbit-Kanälen, abgeleitet aus den Codefehlern im 2-Mbit/s-Signal über der Uhrzeit h für einen Tag. Es ist zusätzlich der Mittelwert M für den Erwartungswert des Anteils der gestörten Sekunden in der Signalregistriereinrichtung berechnet worden, der in diesem Fall den vorgegebenen Höchstwert von 0,4% überschreitet. Außerdem könnte eine Höchstmarke für die stündlichen Werte eingezeichnet werden. Das Dokument kann mit Angaben des Datums und Meßortes und mit der Nummer des Systems versehen werden.

Im beschriebenen Beispiel werden sekundlich Meßwerte ermittelt. Die Signalübertragungseinrichtung ist dennoch hinsichtlich der Datenübertragungskapazität, die z.B. etwa 19,2 kbaud zwischen den Signalsammlern beträgt, nicht überfordert. Da die Meßdaten ohnehin nur bei Bedarf (z.B. Hinweis eines Kunden, Wartung) ausgewertet zu werden braucht, ist die Speicherung von besonderem Vorteil.

**Patentansprüche**

1. Überwachungsvorrichtung zur Überwachung des Betriebszustandes von Übertragungseinrichtungen der Nachrichtenübertragungstechnik, die aus Baueinheiten (Geräte 70...70d) zusammengesetzt sind, wobei die Überwachungsvorrichtung sowohl Störungsmeldungen als auch Meßwerte erfaßt und einen Überwachungsinformationsgeber (Mikroprozessor 14) enthält, der zusammen mit Überwachungsinformationsgebern weiterer Überwachungsvorrichtungen an Signalsammler (78, 78a) einer Signalsammeleinrichtung (78, 78a, 79, 79a, 80, 84) zur zentralen Betriebsbeobachtung anschließbar ist,
   **dadurch gekennzeichnet,**
   daß die Überwachungsvorrichtung mit einer in einer der Baueinheiten (Geräte 70...70d) enthaltenen Auswerte- und Speichervorrichtung (14, 20) versehen ist und daß mittels der Auswertevorrichtung (14) periodisch erfaßte und aufbereitete Meßwerte laufend mit Hilfe der Speichervorrichtung (14, 20) derart schrittweise registrierbar sind, daß die Speicherinhalte zyklisch überschrieben werden.

2.  Überwachungsvorrichtung nach Anspruch 1,
    **dadurch gekennzeichnet,**
    daß die Überwachungsvorrichtung zur Überwachung mehrerer in einer gemeinsamen Aufnahmevorrichtung untergebrachter Baueinheiten vorgesehen ist und einen als Überwachungs-Baueinheit in derselben Aufnahmevorrichtung untergebrachten zentralen Überwachungsteil (77) aufweist und daß der zentrale Überwachungsteil (77) mit der Auswerte- und Speichervorrichtung (14, 20) versehen ist und den Überwachungsinformationsgeber (14) enthält.

3.  Überwachungsvorrichtung nach Anspruch 1 oder 2,
    **dadurch gekennzeichnet,**
    daß die Auswerte- und Speichervorrichtung (14, 20) und der Überwachungsinformationsgeber (Mikroprozessor 14) als Einrichtung zur Ablaufsteuerung einen gemeinsamen Mikroprozessor (14) aufweisen.

4.  Überwachungsvorrichtung nach Anspruch 2 oder 3,
    **dadurch gekennzeichnet,**
    daß die zentralen Überwachungsteile (77a...d) jeweils mit einer für die daran angeschlossenen Baueinheiten zentralen Signalisierungsvorrichtung versehen sind.

5.  Überwachungsvorrichtung nach einem der Ansprüche 1 bis 4,
    **dadurch gekennzeichnet,**
    daß als überwachte Baueinheiten mehrere Sende- und/oder Empfangsbaugruppen einer PCM-Nachrichtenübertragungseinrichtung zusammen mit einer zugeordneten Überwachungsbaugruppe als zentraler Überwachungsteil (77) in ein und demselben Einsatz untergebracht sind und daß die Sende-und/oder Empfangs-Baugruppen jeweils eine Vorrichtung (64) zur Codefehlererkennung enthalten und daß die Überwachungsbaugruppe je Sende- und/oder Empfangs-Baugruppe einen an eine zugeordnete Vorrichtung zur Codefehlererkennung anschließbaren Zähler (3, 3a) enthält.

6.  Überwachungsvorrichtung nach einem der Ansprüche 1 bis 5,

**dadurch gekennzeichnet,**
daß der zentrale Überwachungsteil (77) eine Uhr (18) enthält und daß die aufbereiteten Meßwerte und Störungsmeldungen jeweils zusammen mit der jeweiligen Uhrzeit speicherbar sind.

7.  Überwachungsvorrichtung nach Anspruch 6,
    **dadurch gekennzeichnet,**
    daß die Uhr (18) oder die Uhr und die Speichervorrichtung (20) an eine Batterie (19) angeschlossen sind.

8.  Überwachungsvorrichtung nach einem der Ansprüche 3 bis 7,
    **dadurch gekennzeichnet,**
    daß die Überwachungsvorrichtung ein PROM (14a) zur Speicherung des Überwachungsprogramms enthält.

9.  Überwachungsvorrichtung nach einem der Ansprüche 3 bis 8,
    **dadurch gekennzeichnet,**
    daß an die Einrichtung zur Ablaufsteuerung (Mikrocomputer 14) eine Vorrichtung (11) zur Einstellung des Überwachungsmodus angeschlossen ist.

10. Überwachungsvorrichtung nach Anspruch 5,
    **dadurch gekennzeichnet,**
    daß der zentrale Überwachungsteil (77) einen für die zugeordneten Sende- und/oder Empfangsbaugruppen zentralen AIS-Generator oder Ersatzsignalgenerator und eine sowohl an den AIS-Generator (4) als auch an den Mikroprozessor (14) angeschlossene Überwachungsvorrichtung (5) zur Überwachung des AIS-Generators (4) sowie eine an die Überwachungsvorrichtung angeschlossene Anzeigevorrichtung (6) enthält.

**Claims**

1.  Monitoring apparatus for monitoring the operating state of transmission devices in telecommunications technology, which are made up of modules (units 70...70d), the monitoring apparatus detecting both malfunction signals and measured values and containing a monitoring information transmitter (microprocessor 14), which, together with monitoring information transmitters of further monitoring apparatuses, can be connected to signal collectors (78, 78a) of a signal collecting device (78, 78a, 79, 79a, 80, 84) for central in-service supervision, characterised in that the monitoring apparatus is provided with an evaluation and storage apparatus (14, 20) contained within one of the modules (units 70...70d), and in that measured values, which have been periodically detected and processed by the evaluation apparatus (14), can be recorded continuously with the aid of the storage apparatus (14, 20) in a step-by-step manner, such that the store contents are cyclically overwritten.

2. Monitoring apparatus according to Claim 1, characterised in that the monitoring apparatus is provided for monitoring a plurality of modules accommodated within a common mounting apparatus and has a central monitoring section (77) accommodated as a monitoring module within the same mounting apparatus, and in that the central monitoring section (77) is provided with the evaluation and storage apparatus (14, 20) and contains the monitoring information transmitter (14).

3. Monitoring apparatus according to Claim 1 or 2, characterised in that the evaluation and storage apparatus (14, 20) and the monitoring information transmitter (microprocessor 14) make use of a common microprocessor (14) as a sequence control device.

4. Monitoring apparatus according to Claim 2 or 3, characterised in that the central monitoring sections (77a...d) are each provided with a central signalling apparatus for the modules connected thereto.

5. Monitoring apparatus according to one of Claims 1 to 4, characterised in that a plurality of transmitter and/or receiver assemblies of a PCM telecommunications device, as monitored modules, together with an associated monitoring assembly as a central monitoring section (77), are accommodated in one and the same insert, and in that the transmitter and/or receiver assemblies each contain an apparatus (64) for code error identification, and in that, for each transmitter and/or receiver assembly, the monitoring assembly, contains a counter (3, 3a) that can be connected to an associated code error identification apparatus.

6. Monitoring apparatus according to one of Claims 1 to 5, characterised in that the central monitoring section (77) contains a clock (18), and in that the processed measured values and malfunction signals can each be stored together with the associated time.

7. Monitoring apparatus according to Claim 6, characterised in that the clock (18) or the clock and the storage apparatus (20) are connected to a battery (19).

8. Monitoring apparatus according to one of Claims 3 to 7, characterised in that the monitoring apparatus contains a PROM (14a) for storage of the monitoring program.

9. Monitoring apparatus according to one of Claims 3 to 8, characterised in that an apparatus (11) for setting the monitoring mode is connected to the sequence control device (microcomputer 14).

10. Monitoring apparatus according to Claim 5, characterized in that the central monitoring section (77) contains a central AIS generator or equivalent signal generator for the associated transmitter and/or receiver assemblies, and a monitoring apparatus (5), connected both to the AIS generator (4) and to the microprocessor (14), for monitoring the AIS generator (4), as well as a display apparatus (6) connected to the monitoring apparatus.

**Revendications**

1. Dispositif de contrôle servant à contrôler l'état de fonctionnement de dispositifs de transmission de la technique de transmission d'informations, qui sont constitués par la réunion de modules (appareils 70...70d), le dispositif de contrôle détectant aussi bien des signalisations de perturbations que des valeurs de mesure et contenant un transmetteur d'informations de contrôle (microprocesseur 14), qui peut être raccordé, ainsi que des transmetteurs d'informations de contrôle d'autres dispositifs de contrôle, à des unités (78,78a) de collecte de signaux d'un dispositif (78,78a,79,79a,80,84) de collecte de signaux pour une observation centrale de service, caractérisé par le fait que le dispositif de contrôle comporte un dispositif d'évaluation et de mémorisation (14,20) qui est contenu dans l'un des modules (appareils 70...70d), et que des valeurs de mesure détectées périodiquement et préparées à l'aide du dispositif d'évaluation et de mémoire (14) peuvent être enregistrées en permanence pas à pas à l'aide du dispositif de mémoire (14, 20) de telle sorte qu'un enregistrement cyclique en surinscription peut être appliqué au contenu de la mémoire.

2. Dispositif de contrôle suivant la revendication 1, caractérisé par le fait que le dispositif de contrôle est prévu pour le contrôle de plusieurs modules logés dans un dispositif récepteur commun et comporte une partie centrale de contrôle (77) logée, en tant que module de contrôle, dans le même dispositif récepteur, et que la partie centrale de contrôle (77) est équipée du dispositif d'évaluation et de mémoire (14,20) et contient le transmetteur d'informations et de contrôle (14).

3. Dispositif de contrôle suivant la revendication 1 ou 2, caractérisé par le fait que le dispositif d'évaluation et de mémoire (14,20) et le transmetteur d'informations de contrôle (microprocesseur 14) comportent, en tant que dispositif de commande d'exécution, un microprocesseur commun (14).

4. Dispositif de contrôle suivant la revendication 2 ou 3, caractérisé par le fait que les parties centrales de contrôle (77a...d) sont équipées respectivement d'un dispositif de signalisation, qui est central pour les modules raccordés auxdites parties de contrôle.

5. Dispositif de contrôle suivant l'une des revendications 1 à 4, caractérisé par le fait que plusieurs modules d'émission et/ou de réception d'un dispositif de transmission d'informations MIC sont logés, en tant que modules contrôlés, ainsi qu'un module de contrôle associé utilisé comme partie centrale de contrôle (77), dans une même unité et que les modules d'émission et/ou de réception contiennent respectivement un dispositif (64) servant à identifier les erreurs de code, et que le module de contrôle contient, pour chaque module d'émission et/ou de réception, un compteur (3;3a) pouvant être raccordé à un dispositif associé d'identification d'erreurs de code.

6. Dispositif de contrôle suivant l'une des revendications 1 à 5, caractérisé par le fait que la partie centrale de contrôle (77) contient une horloge (18) et que les valeurs de mesure et les signalisations de perturbation, préparées, peuvent être mémorisées respectivement conjointement avec l'heure respective.

7. Dispositif de contrôle suivant la revendication 6, caractérisé par le fait que l'horloge (18) ou l'horloge et le dispositif de mémoire (20) sont raccordés à une batterie (19).

8. Dispositif de contrôle suivant l'une des revendications 3 à 7, caractérisé par le fait que le dispositif de contrôle contient une mémoire PROM (14a) servant à mémoriser le programme de contrôle.

9. Dispositif de contrôle suivant l'une des revendications 3 à 8, caractérisé par le fait qu'un dispositif (11) servant à régler le mode de contrôle est raccordé au dispositif de commande d'exécution (microordinateur 14).

10. Dispositif de contrôle suivant la revendication 5, caractérisé par le fait que la partie centrale de contrôle (77) contient un générateur AIS ou un générateur de signaux de remplacement, qui est central pour les modules d'émission et/ou de réception associés, et un dispositif de contrôle (5) raccordé aussi bien au générateur AIS (4) qu'au microprocesseur (14), pour le contrôle du générateur AIS (4) ainsi qu'un dispositif d'affichage (6) raccordé au dispositif de contrôle.

FIG 1

FIG 4

# FIG 2

# FIG 3